# EUROPÄISCHE PATENTSCHRIFT

(11) **EP 1 283 131 B1**
(45) Veröffentlichungstag und Bekanntmachung des Hinweises auf die Patenterteilung: **04.01.2006**
(21) Anmeldenummer: 02016813.4
(22) Anmeldetag: 26.07.2002
(51) Int. Cl.: B60R 11/02, B60Q 3/02, B60R 13/02

(54) **Fahrzeuginnenraummodul**
Passenger compartment module
Module pour habitacle de véhicule

(30) Priorität: 10.08.2001 DE 20113304 U
(43) Veröffentlichungstag der Anmeldung: 12.02.2003
(73) Patentinhaber: ArvinMeritor GmbH, 63128 Dietzenbach (DE)
(72) Erfinder: Hock, Daniel, 63760 Johannesberg (DE); Zinsmeister, Arnulf, 79674 Todtnau (DE)
(74) Vertreter: Kitzhofer, Thomas

(56) Entgegenhaltungen:
- EP-A- 0 473 263
- GB-A- 2 241 410
- US-A- 4 752 962
- US-A- 5 944 414

## Beschreibung

Die Erfindung betrifft ein Fahrzeuginnenraummodul mit einem großflächigen, im Fahrzeug im eingebauten Zustand von innen sichtbaren Innenraumverkleidungsteil, das eine Öffnung aufweist, und mit einem in der Öffnung positionierbaren, am Verkleidungsteil befestigbaren Einsatz mit einem Außengehäuse, in dem wenigstens ein elektrisches Bauteil untergebracht ist.

Ein solches Fahrzeuginnenraummodul ist beispielsweise das Dachhimmelmodul eines Fahrzeugs, bei dem das großflächige Innenraumverkleidungsteil das Dach innenseitig abdeckt. Ein weiteres Fahrzeuginnenraummodul ist beispielsweise die Türverkleidung samt daran angeschlossener Bauteile. Elektrische oder auch elektronische Bauteile, die am meist aus Kunststoff oder gepreßten Faserteilen bestehenden Verkleidungsteil befestigt sind, sind vorzugsweise Leuchtmittel, Schalter oder ein Mikrophon oder Lautsprecher, z.B. für das Telefon. Das elektrische Bauteil wird bei der Montage in die Öffnung eingesteckt, um vorzugsweise auf der sichtbaren Innenseite bündig mit dem Verkleidungsteil abzuschließen. Die elektrische Kontaktierung mit dem Kabelbaum des Fahrzeugs erfolgt über Stecker, die teuer herzustellen sind und Überlängen von Kabel erfordern, um ein entsprechendes Einbauen und Herausnehmen des Einsatzes zu ermöglichen. Die Überlängen erfordern wiederum geeignete Maßnahmen, um Klappergeräusche zu vermeiden.

Die GB 2 241 410 A zeigt einen Lautsprecher, der mittels einer Bayonett-Verbindung an einem Verkleidungsteil angebracht und schnell gelöst werden kann. Die elektrische Kontaktierung erfolgt hier über Kontakte an einem axial gegenüber dem Verkleidungsteil abstehenden Ring und an einem vom Rand der Öffnung des Verkleidungsteils entfernten Teil.

In der gattungsbildenden US 5 944 414 A ist ein Innenraumverkleidungsteil gezeigt, bei dem elektrische Einsätze am Dachmodul angebracht sind. Dabei sind die plattenförmigen Einsätze in Öffnungen im Innenraumverkleidungsteil angebracht. Das Dachmodul weist hier einen elektrischen Leiter in Form eines Flachbandkabels auf, den Lampen kontaktieren, die in Öffnungen in den Einsätzen angeordnet sind.

Aus der DE 35 29 660 A1 ist eine Kabelbaumbefestigungsvorrichtung für eine Fahrzeugtür bekannt. Dabei wird zwischen der Rohbautür und der Innenraumverkleidung ein sogenanntes großflächiges Innenseitenbrett angeordnet, in dem Kabel und an Kabelenden Stecker vorgesehen sind, die allesamt in das Brett eingeschäumt werden. Zusätzliche Befestiger sind vorgesehen, um das Seitenbrett und die Innenraumverkleidung am Türrahmen zu befestigen. Beim Befestigen werden die umschäumten Stecker in Gegenstecker an der Rohbautür und an der Innenraumverkleidung eintreten, um einen Kontakt zu schaffen. Die Positionierung der Befestigungsmittel und der Stecker zueinander muß äußerst exakt sein, ansonsten können Stecker und davon beabstandete Befestigungsmittel nicht mit den zugeordneten Steckern und Befestigungsmitteln am anderen Teil bei der Montage einander kontaktieren.

Aus der DE 196 53 431 A1 ist ein Dachmodul bekannt, bei dem ein großflächiges Innenraumverkleidungsteil, nämlich der Dachhimmel vorgesehen ist. Zwischen der Innenraumverkleidung und dem Dach selbst ist eine im eingebauten Zustand des Moduls nicht sichtbare Montageplatte angeordnet. Diese Montageplatte enthält eine Antenne und einen Modularschaltkreisblock. Eine Leselampe wird beispielsweise rückseitig, d.h. von der dem Innenraumverkleidungsteil abgewandten Seite der Montageplatte aus, in eine Öffnung in der Montageplatte eingesetzt und an der Montageplatte befestigt. Vom Innenraumverkleidungsteil aus wird dann eine Abdeckung für die Lampe aufgesetzt. Darüber hinaus können ein beleuchteter Kosmetikspiegel in der Sonnenblende und ein Rückspiegel an der Montageplatte befestigt sein, wobei auch hier ein teurer Steckverbinder vorgesehen ist, der einen festen Abstand zu den Halterungen für den Kosmetikspiegel und den Rückspiegel haben muß, damit bei der Montage der Sonnenblende und des Rückspiegels auch Steckkontakte miteinander in Berührung kommen. Die Montageplatte und der Dachhimmel werden aneinander befestigt, indem ein rückseitig am Dachhimmel angebrachtes, vorstehendes Gehäuse durch eine Öffnung in der Montageplatte gesteckt wird. Ein Gegengehäuse an der Montageplatte ist mit Kontakten und einem mit den Kontakten gekoppelten Überwurfbügel versehen. Der Überwurfbügel wird parallel zur Plattenebene verschoben, und die Kontakte werden ebenfalls in dieser Ebene in das Gehäuse auf der Rückseite des Dachhimmels geführt. Die Positionierung der Teile zueinander muß sehr exakt sein, damit die Kontaktstifte in die Öffnungen im Gehäuse auf der Rückseite des Dachhimmels treffen. Die Gestaltung der beiden Gehäüseteile mit den verschiebbaren Kontakten ist zudem sehr aufwendig und teuer.

Aufgabe der Erfindung ist es, ein Fahrzeuginnenraummodul zu schaffen, bei dem der Einsatz einfach und schnell am Verkleidungsteil befestigbar ist und das trotzdem kostengünstig hergestellt wird. Zudem sollte eine leichte Austauschbarkeit für den Servicefall gegeben sein.

Die Aufgabe wird bei einem Fahrzeuginnenraummodul der eingangs genannten Art dadurch gelöst, daß unmittelbar am Rand der Öffnung wenigstens eine am Verkleidungsteil vorgesehene, freiliegende elektrische Kontaktfläche vorhanden ist und der Einsatz ein Mittel zum Befestigen des Einsatzes am Verkleidungsteil hat, wobei das Mittel einen solchen Gegenkontakt aufweist, daß die Kontaktfläche durch das Befestigen des Einsatzes in der Öffnung den Gegenkontakt elektrisch leitend berührt, so daß elektrischer Strom zum Bauteil oder von ihm wegfließen kann. Beim erfindungsgemäßen Modul wird mit der Befestigung des Einsatzes am Verkleidungsteil gleichzeitig der elektrische Kontakt zwischen einer verkleidungsteilseitigen Kontaktfläche und dem Gegenkontakt am Einsatz geschlossen, so daß keine teuren Stecker mehr erforderlich sind und auch keine separate Montage der Leitungsverbindungen erfolgt. Indem die Kontaktfläche unmittelbar am Rand vorgesehen ist und freiliegt, ist keine aufwendige Unterbringung in einem teuren Gehäuse vorgesehen. Das Mittel zum Befestigen kann somit unmittelbar am Rand angreifen, um den Einsatz stabil zu befestigen, und das Mittel zum Befestigen dient gleichzeitig der elektrischen Kontaktierung. Die konstruktive Ausgestaltung des Mittels zum Befestigen kann sehr einfach ausgeführt sein, da, wie erwähnt, die Kontaktfläche freiliegt. Größere Kontaktflächen erlauben zudem einen einfachen Toleranzausgleich.

Vorzugsweise ist die Kontaktfläche an der dem Fahrzeuginnenraum abgewandten Rückseite des Innenraumverkleidungsteils und/oder an der die Öffnung begrenzenden Innenseite freiliegend und an der Rückseite bzw. Innenseite angebracht, d.h. am Rand der Öffnung befestigt.

Ferner ist nicht nur eine Kontaktfläche, sondern sind so viele Kontaktflächen vorgesehen, daß das Bauteil nur über diese Kontaktflächen an die Stromquelle und an Masse angeschlossen ist.

Das Innenraumverkleidungsteil besteht vorzugsweise aus elektrisch isolierendem Material.

Gemäß der bevorzugten Ausführungsform erfolgt die Befestigung des Einsatzes durch eine Rastverbindung, also vorzugsweise eine Verbindung, die keine zusätzlichen Befestigungsmittel wie Schrauben oder dergl. erforderlich macht, um die Montagezeit zu reduzieren.

Das Rastmittel dient in diesem Zusammenhang auch der elektrischen Kontaktierung, indem an ihm die Kontaktfläche oder der Gegenkontakt vorgesehen ist.

Eine Ausführungsform diesbezüglich sieht vor, daß der Einsatz eine quer zu seiner Einführrichtung auswärts ragende, elastische Rastfeder hat, die den Gegenkontakt bildet.

Die Rastfeder kann so ausgebildet sein, daß sie im eingebauten Zustand des Einsatzes den Rand zwischen sich und einem vorstehenden Bund des Einsatzes klemmt. Durch diese Klemmwirkung können Klappergeräusche sicher vermieden werden.

Der Rand der Öffnung ist bevorzugt durch einen Verstärkungsrahmen gebildet, der eine verbesserte Halterung des Einsatzes sowie ein mehrfaches Auswechseln des Einsatzes erlaubt, ohne daß der Rand stark abgenutzt wird und die Qualität der Befestigung darunter leidet.

An dem Verstärkungsrahmen, der bevorzugt aus einem elektrisch nichtleitenden Material ist, ist die Kontaktfläche angebracht, so daß am Rest des großflächigen Verkleidungsteils keine zusätzlichen aufwendigen Maßnahmen getroffen werden müssen, um die Kontaktfläche zur Verfügung zu stellen.

Der Verstärkungsrahmen kann zusammen mit der Kontaktfläche ein vorgefertigtes Bauteil bilden, welches am Rest des Verkleidungsteils befestigt ist, beispielsweise durch Umschäumen, Verkleben oder Verclipsen.

Wenn die Kontaktfläche durch einen Metallstreifen gebildet ist, an dem ein Kabel des Kabelbaumes des Fahrzeugsteckers steckerfrei befestigt ist, kann eine weitere Verbindung über Stecker eingespart werden. Andere preiswertige Kontaktierungsarten, wie z.B. Verschrauben, Vernieten, Schweißen oder Löten werden angewandt. Alternativ ist es natürlich auch möglich, daß ein Kabel, eine Leiterbahn oder eine gedruckte Schaltung zum Metallstreifen führt, wobei das Kabel bereits beim Zulieferer des Moduls mit dem Metallstreifen kontaktiert und an der Innenraumverkleidung befestigt wird, so daß dann nach der eigentlichen Montage des Moduls im Fahrzeug das andere, freie Kabelende mit dem Kabelbaum verbunden wird.

Der Einsatz wird zum Austausch desselben lösbar am Rand befestigt.

Vorzugsweise ragt der Einsatz durch die Öffnung hindurch, so daß der Einsatz kaum in den Innenraum vorsteht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Schnittansicht durch einen Abschnitt eines erfindungsgemäßen Fahrzeuginnenraummoduls in Form eines Dachhimmelmoduls,
- Figur 2 eine Seitenansicht des in Figur 1 dargestellten Einsatzes,
- Figur 3 eine Draufsicht auf einen in Figur 1 dargestellten Verstärkungsrahmen und
- Figur 4 einen Schnitt durch den Verstärkungsrahmen nach der Linie IV-IV in Figur 3.

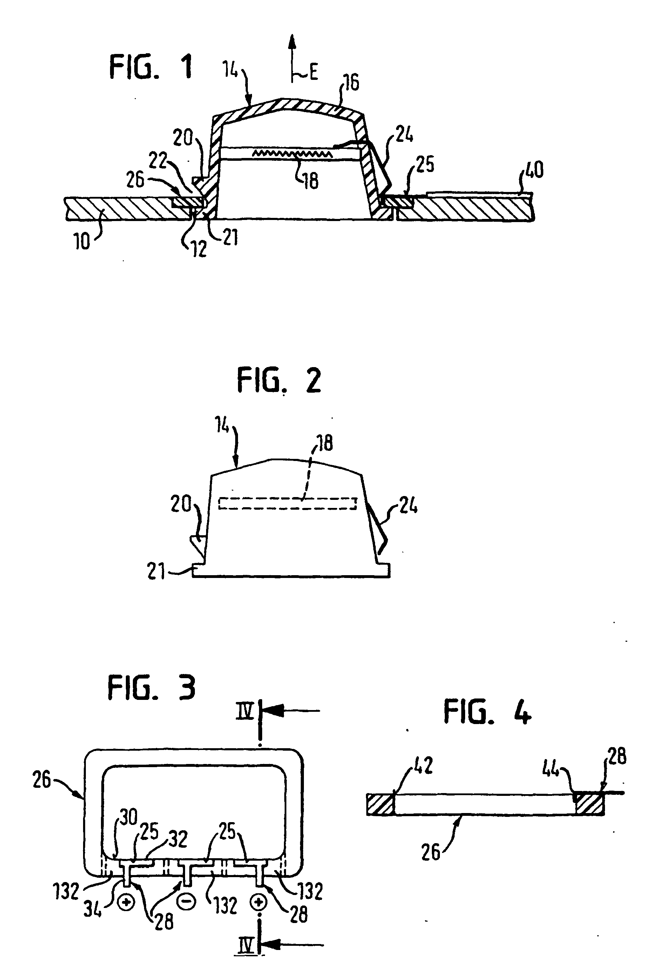

In Figur 1 ist ein Fahrzeuginnenraummodul in Form eines Dachhimmelmoduls dargestellt, mit einem großflächigen Innenraumverkleidungsteil 10 aus elektrisch isolierendem Material, vorzugsweise aus gepreßten Faserwerkstoffen mit einem zum Innenraum weisenden Dekormaterial. Das gezeigte Modul kann aber auch ein Türinnenraumverkleidungsmodul sein. Das Innenraumverkleidungsteil hat wenigstens eine Öffnung 12, in die ein Einsatz 14 eingesetzt und am Innenraumverkleidungsteil 10 befestigt ist. Der durch die Öffnung 12 hindurchragende Einsatz 14 hat ein glockenförmiges Außengehäuse 16 aus elektrisch isolierendem Material, in welches ein elektrisches Bauteil 18, z.B. ein Leuchtmittel, ein Schalter, ein Mikrophon oder Lautsprecher, integriert ist. Das elektrische Bauteil 18 ist zur Vereinfachung in Figur 1 als eine Art Brücke zwischen gegenüberliegenden Seitenwänden des Außengehäuses 16 dargestellt.

Der Einsatz 14 ist durch ein Befestigungsmittel in Form einer Rastverbindung mit dem Innenraumverkleidungsteil 10 verbunden. Hierzu sind auf der in Figur 1 linken Seitenwand abstehende Haltenasen 20 am Außengehäuse 16 vorgesehen, die zwischen sich und einem vorstehenden Bund 21 eine Aufnahme 22 bilden. Auf der entgegengesetzten Seite des Außengehäuses 16 sind drei Rastfedern 24 angeordnet, die aus Federstahl und damit elektrisch leitend sind. Die Rastfedern, die Rastmittel bilden, haben quer zur Einführrichtung E des Einsatzes 14 seitlich nach außen ragende Abschnitte, die beim Einführen in Richtung E nach innen wandern und, sobald sie am Innenraumverkleidungsteil 10 entlanggeglitten sind, nach außen federn.

Die Rastfedern 24, die allesamt gleich ausgeführt sind und hintereinanderliegen, sind fest mit dem Außengehäuse 16 verbunden und dienen zusätzlich zur elektrischen Kontaktierung des elektrischen Bauteils 18 oder der mehreren, in dem Einsatz 14 vorgesehenen Bauteile.

Den Rand der Öffnung 12 definiert ein ringförmig geschlossener Verstärkungsrahmen 26 aus Kunststoff, der außenseitig bündig mit dem Rest des Innenraumverkleidungsteils 10, nämlich dem großflächigen Teil aus Faserwerkstoffen, abschließt, mit diesem aber eine Einheit, nämlich das Innenraumverkleidungsteil 10, bildet. Alternativ kann der Verstärkungsrahmen auch aus mehreren zueinander isolierten Segmenten aus leitendem Material bestehen, deren Oberseite die Kontaktfläche bildet. Die Segmente sind mit dem Bezugszeichen 132 versehen.

Der Rahmen 26 ist ein separates, vorgefertigtes Teil, das entweder durch Klipsen oder Kleben mit dem Rest des Innenraumverkleidungsteils 10 verbunden ist oder beim Herstellen des Innenraumverkleidungsteils 10 in eine Schaumform eingelegt und umschäumt wird. Am Verstärkungsrahmen 26 sind rückseitig mehrere rückseitig freiliegende Metallstreifen 28, die voneinander isoliert sind, befestigt. Die Metallstreifen 28 haben einen parallel zur Innenseite 30 des Verstärkungsrahmens verlaufenden, langen Abschnitt 32 sowie einen rechtwinklig hierzu abstehenden Abschnitt 34 mit einem freien Ende, das gegenüber dem Rahmen 26 seitlich vorsteht. Alternativ können die Kontaktflächen auch durch rückseitig auf das Verkleidungsteil aufgedruckte oder geklebte Leiterbahnen gebildet werden.

Jedem Metallstreifen 28 ist eine Rastfeder 24 zugeordnet, die die Oberseite des Metallstreifens 28, die als Kontaktfläche 25 bezeichnet wird, im verrasteten Zustand gemäß Figur 1 berührt, so daß ein elektrischer Kontakt automatisch bei der Befestigung erfolgt, indem die Befestigungsmittel gleichzeitig als stromführendes Mittel ausgeführt sind. Die elastischen Rastfedern bilden einen Gegenkontakt zur freiliegenden Kontaktfläche 25, an der sie im befestigten Zustand anliegen und klemmen den Rand zwischen sich und dem Bund 21.

Zur Sicherung des Kontaktes kann, wie in Figur 4 dargestellt, der Metallstreifen 28 um die Kante 42 herum zur Innenseite der Öffnung 14 oder, in anderen Worten, in die Öffnung 14 hinein abgewinkelt sein, so daß der Kontakt zur zugeordneten Rastfeder 24 auch an der entstehenden Kante 44 erfolgen kann.

An den freien, überstehenden Enden der Abschnitten 34 sind Kabel 40 ohne Vorsehen eines Steckers angebracht, beispielsweise durch Schrauben, Nieten, Schweißen oder Löten.

Der Einsatz 14 ist lösbar am Rahmen 26 befestigt, um beispielsweise ein defektes elektrisches Bauteil 18 auszutauschen.

Wie zu erkennen ist, sind sowohl zur Schaffung eines elektrischen Kontaktes als auch zum Unterbrechen des elektrischen Kontaktes bei der Demontage keine Kabel oder dergl. voneinander zu lösen, vielmehr wird über die Befestigung automatisch der elektrische Kontakt hergestellt oder, beim Lösen der Befestigung, wieder unterbrochen.

Das elektrische Bauteil 18 ist ausschließlich über die in ausreichender Zahl vorgesehenen Metallstreifen 28 in einen oder mehrere Stromkreise integriert und an die Stromquelle (+) und an Masse (-) angeschlossen (siehe Figur 3).

## Patentansprüche

1. Fahrzeuginnenraummodul, mit
einem großflächigen, im im Fahrzeug eingebauten Zustand von innen sichtbaren Innenraumverkleidungsteil (10), das eine Öffnung (12) aufweist, und
mit einem in der Öffnung (12) positionierten, am Innenraumverkleidungsteil (10) befestigten Einsatz (14) mit einem Außengehäuse, in dem wenigstens ein elektrisches Bauteil (18) untergebracht ist,
**dadurch gekennzeichnet, daß**
unmittelbar am Rand der Öffnung (12) wenigstens eine am Verkleidungsteil (10) vorgesehene, freiliegende elektrische Kontaktfläche (25) vorhanden ist und der Einsatz (14) ein Mittel zum Befestigen des Einsatzes (14) am Verkleidungsteil (10) mit einen solchen Gegenkontakt hat, daß die Kontaktfläche (25) durch das Befestigen des Einsatzes (14) in der Öffnung (12) den Gegenkontakt elektrisch leitend berührt.

2. Fahrzeuginnenraummodul nach Anspruch 1, **dadurch gekennzeichnet, daß** die Kontaktfläche (25) an der dem Fahrzeuginnenraum abgewandten Rückseite des Innenraumverkleidungsteils (10) und/oder an der die Öffnung (12) begrenzenden Innenseite freiliegt und an der Rückseite bzw. Innenseite angebracht ist.

3. Fahrzeuginnenraummodul nach Anspruch 1 oder 2, **dadurch gekennzeichnet, daß** die Kontaktfläche (25) am Rand angebracht ist.

4. Fahrzeuginnenraummodul nach einem der vorhergehenden Ansprüche, **dadurch gekennzeichnet, daß** am Rand der Öffnung (12) so viele Kontaktflächen (25) vorhanden sind, daß das Bauteil (18) nur über die Kontaktflächen (25) an die Stromquelle und an Masse angeschlossen ist.

5. Fahrzeuginnenraumverkleidung nach einem der vorhergehenden Ansprüche, **dadurch gekennzeichnet, daß** die Befestigung des Einsatzes (14) durch eine Rastverbindung erfolgt.

6. Fahrzeuginnenraummodul nach Anspruch 5, **dadurch gekennzeichnet, daß** wenigstens ein Rastmittel auch die Kontaktfläche (25) oder den Gegenkontakt aufweist.

7. Fahrzeuginnenraummodul nach Anspruch 4, **dadurch gekennzeichnet, daß** der Einsatz (14) eine quer zur Einführrichtung (E) auswärts ragende elastische Rastfeder (24) hat, die den Gegenkontakt bildet.

8. Fahrzeuginnenraummodul nach Anspruch 7, **dadurch gekennzeichnet, daß** die Rastfeder (24) so ausgebildet ist, daß sie im eingebauten Zustand des Einsatzes (14) den Rand zwischen sich und einem vorstehenden Bund (21) des Einsatzes (14) klemmt.

9. Fahrzeuginnenraummodul nach einem der vorhergehenden Ansprüche, **dadurch gekennzeichnet, daß** der Rand durch einen Verstärkungsrahmen (26) gebildet ist, an dem die Kontaktfläche (25) angebracht ist.

10. Fahrzeuginnenraummodul nach einem der Ansprüche 1 bis 8, **dadurch gekennzeichnet, daß** der Verstärkungsrahmen (26) wenigstens einen elektrisch leitenden Abschnitt aus leitendem Material aufweist, dessen Außenfläche die Kontaktfläche (25) bildet.

11. Fahrzeuginnenraummodul nach Anspruch 9 oder 10, **dadurch gekennzeichnet, daß** der Verstärkungsrahmen (26) ein zusammen mit der Kontaktfläche (25) vorgefertigtes Teil bildet, welches am Rest des Verkleidungsteils (10) befestigt ist.

12. Fahrzeuginnenraummodul nach Anspruch 11, **dadurch gekennzeichnet, daß** der Verstärkungsrahmen (26) am Rest des Verkleidungsteils (10) durch Umschäumen, Verkleben oder Verclipsen befestigt ist.

13. Fahrzeuginnenraummodul nach einem der vorhergehenden Ansprüche, **dadurch gekennzeichnet, daß** die Kontaktfläche (25) durch einen Metallstreifen (28) gebildet ist, an dem ein Kabel (40) des Kabelbaums des Fahrzeugs steckerfrei befestigt ist.

14. Fahrzeuginnenraummodul nach einem der vorhergehenden Ansprüche, **dadurch gekennzeichnet, daß** der Einsatz (14) zum Austausch desselben lösbar am Rand befestigt ist.

15. Fahrzeuginnenraummodul nach einem der vorhergehenden Ansprüche, **dadurch gekennzeichnet, daß** es ein Dachhimmelmodul oder ein Türinnenraumverkleidungsmodul ist.

16. Fahrzeuginnenraummodul nach einem der vorhergehenden Ansprüche, **dadurch gekennzeichnet, daß** das elektrische Bauteil (18)
ein Leuchtmittel,
ein Schalter,
ein Mikrophon oder
ein Lautsprecher ist.

17. Fahrzeuginnenraummodul nach einem der vorhergehenden Ansprüche, **dadurch gekennzeichnet, daß** der Einsatz (14) durch die Öffnung (12) hindurchragt.

18. Fahrzeuginnenraummodul nach einem der vorhergehenden Ansprüche, **dadurch gekennzeichnet, daß** das Innenraumverkleidungsteil (10) und der Einsatz (14) so ausgebildet sind, daß der Einsatz (14) nur von der dem Fahrzeuginnenraum zugewandten Innenseite aus in die Öffnung (12) gesteckt werden kann.

## Claims

1. A vehicular interior space module, comprising
an interior space lining part (10) that has a large surface area and is visible from inside in the state when installed in the vehicle, the interior space lining part including an opening (12), and
an insert (14) which is located in the opening (12) and fastened to the interior space lining part (10), the insert having an outer housing in which at least one electrical component (18) is accommodated,
**characterised in that**
at least one exposed electrical contact surface area (25) is provided on the lining part (10) so as to be arranged directly on the edge of the opening (12), the insert (14) having a means provided for fastening the insert (14) to the lining part (10) and including a cooperating contact configured such that the contact surface area (25) contacts the cooperating contact in an electrically conductive manner through fastening the insert (14) in the opening (12).

2. The vehicular interior space module according to claim 1, **characterised in that** the contact surface area (25) is exposed on the rear side of the interior space lining part (10) facing away from the vehicle interior space and/or on the inner side limiting the opening (12), and is provided on the rear side and the inner side, respectively.

3. The vehicular interior space module according to claim 1 or 2, **characterised in that** the contact surface area (25) is provided on the edge.

4. The vehicular interior space module according to any of the preceding claims, **characterised in that** the edge of the opening (12) has so many contact surface areas (25) that the component (18) is connected to the power source and to ground only through the contact surface areas (25).

5. The vehicular interior space module according to any of the preceding claims, **characterised in that** a latching connection is provided for fastening the insert (14).

6. The vehicular interior space module according to claim 5, **characterised in that** at least one latching means also includes the contact surface area (25) or the cooperating contact.

7. The vehicular interior space module according to claim 4, **characterised in that** the insert (14) has an elastic latching spring (24) which projects outwards and transversely to the direction of insertion (E) and forms the cooperating contact.

8. The vehicular interior space module according to claim 7, **characterised in that** the latching spring (24) is configured such that, when the insert (14) is in the installed state, it clamps the edge between it and a protruding collar (21) of the insert (14).

9. The vehicular interior space module according to any of the preceding claims, **characterised in that** the edge is formed by a reinforcement frame (26) on which the contact surface area (25) is provided.

10. The vehicular interior space module according to any of the claims 1 to 8, **characterised in that** the reinforcement frame (26) has at least one electrically conductive section of a conductive material, the outer surface of the section forming the contact surface area (25).

11. The vehicular interior space module according to claim 9 or 10, **characterised in that** the reinforcement frame (26) together with the contact surface area (25) forms a prefabricated part which is fastened to the remainder of the lining part (10).

12. The vehicular interior space module according to claim 11, **characterised in that** the reinforcement frame (26) is fastened to the remainder of the lining part (10) by a foaming-, gluing- or snap-on connection.

13. The vehicular interior space module according to any of the preceding claims, **characterised in that** the contact surface area (25) is formed by a metal strip (28) to which a cable (40) of the cable harness of the vehicle is fastened in a plug-free manner.

14. The vehicular interior space module according to any of the preceding claims, **characterised in that** the insert (14), for the purpose of replacing it, is detachably fastened to the edge.

15. The vehicular interior space module according to any of the preceding claims, **characterised in that** it is a roof liner module or a module for covering a door's interior space.

16. The vehicular interior space module according to any of the preceding claims, **characterised in that** the electrical component (18) is
a lighting device,
a switch,
a microphone or
a loudspeaker.

17. The vehicular interior space module according to any of the preceding claims, **characterised in that** the insert (14) projects through the opening (12).

18. The vehicular interior space module according to any of the preceding claims, **characterised in that** the interior space lining part (10) and the insert (14) are of such design that the insert (14) can only be inserted into the opening (12) from the inner side facing the vehicular interior space.

## Revendications

1. Module pour habitacle de véhicule, avec
un élément de garniture intérieur (10) à grande surface visible de l'intérieur lorsqu'il est à l'état monté dans le véhicule, présentant une ouverture (12), et
muni d'un insert (14) positionné dans l'ouverture (12), fixé à l'élément de garniture intérieur (10) avec un logement extérieur, dans lequel au moins un composant électrique (18) est placé
**caractérisé en ce que** :
au moins une surface de contact électrique (25) mise à découvert prévue sur l'élément de garniture intérieur (10) est disponible directement au bord de l'ouverture (12) et l'insert (14) présente un moyen pour fixer l'insert (14) à l'élément de garniture intérieur (10) avec un contre-contact de sorte que la surface de contact (25) fasse contact de façon électroconductrice avec le contre-contact par la fixation de l'insert (14) dans l'ouverture (12).

2. Module pour habitacle de véhicule selon la revendication 1, **caractérisé en ce que** la surface de contact (25) au dos de la partie de garniture intérieure (10) détournée de l'habitacle du véhicule et/ou sur le côté intérieur limitant l'ouverture (12) est mise à découvert et est placée au dos ou respectivement sur le côté intérieur.

3. Module pour habitacle de véhicule selon la revendication 1 ou 2, **caractérisé en ce que** la surface de contact (25) est placée au bord.

4. Module pour habitacle de véhicule selon l'une quelconque des revendications précédentes, **caractérisé en ce qu'**un nombre suffisant de surfaces de contact (25) est disponible au bord de l'ouverture (12), si bien que le composant (18) n'est raccordé que par l'intermédiaire des surfaces de contact (25) à la source de courant et à la masse.

5. Module pour habitacle de véhicule selon l'une quelconque des revendications précédentes, **caractérisé en ce que** la fixation de l'insert (14) a lieu par une liaison à encliquetage.

6. Module pour habitacle de véhicule selon la revendication 5, **caractérisé en ce qu'**au moins un moyen d'encliquetage comprend aussi la surface de contact (25) ou le contre-contact.

7. Module pour habitacle de véhicule selon la revendication 4, **caractérisé en ce que** l'insert (14) présente un ressort à cran d'arrêt flexible (24), faisant saillie vers l'extérieur transversalement à la direction d'introduction (E), qui forme le contre-contact.

8. Module pour habitacle de véhicule selon la revendication 7, **caractérisé en ce que** le ressort à cran d'arrêt (24) est réalisé, de sorte qu'il coince le bord entre lui et un collet faisant saillie (21) de l'insert (14) lorsque l'insert (14) est à l'état monté.

9. Module pour habitacle de véhicule selon l'une quelconque des revendications précédentes, **caractérisé en ce que** le bord est formé par un cadre de renforcement (26), sur lequel la surface de contact (25) est appliquée.

10. Module pour habitacle de véhicule selon l'une quelconque des revendications 1 à 8, **caractérisé en ce que** le cadre de renforcement (26) comporte au moins une section électroconductrice constituée d'un matériau conducteur dont la surface extérieure forme la surface de contact (25).

11. Module pour habitacle de véhicule selon la revendication 9 ou 10, **caractérisé en ce que** le cadre de renforcement (26) forme conjointement avec la surface de contact (25) une partie préfabriquée qui est fixée au reste de l'élément de garniture intérieur (10).

12. Module pour habitacle de véhicule selon la revendication 11, **caractérisé en ce que** le cadre de renforcement (26) est fixé au reste de l'élément de garniture intérieur (10) par moussage, collage ou clipsage.

13. Module pour habitacle de véhicule selon l'une quelconque des revendications précédentes, **caractérisé en ce que** la surface de contact (25) est formée par une bande métallique (28), à laquelle un câble (40) du faisceau de câbles du véhicule est fixé sans connecteur.

14. Module pour habitacle de véhicule selon l'une quelconque des revendications précédentes, **caractérisé en ce que** l'insert (14) est fixé au bord de façon amovible en vue de son remplacement.

15. Module pour habitacle de véhicule selon l'une quelconque des revendications précédentes, **caractérisé en ce qu'**il s'agit d'un module d'habillage de toit ou d'un module de garniture d'intérieur de portière.

16. Module pour habitacle de véhicule selon l'une quelconque des revendications précédentes, **caractérisé en ce que** le composant électrique (18) est :
un luminaire,
un commutateur,
un microphone, ou
un haut-parleur.

17. Module pour habitacle de véhicule selon l'une quelconque des revendications précédentes, **caractérisé en ce que** l'insert (14) fait saillie à travers l'ouverture (12).

18. Module pour habitacle de véhicule selon l'une quelconque des revendications précédentes, **caractérisé en ce que** l'élément de garniture intérieur (10) et l'insert (14) sont réalisés, de sorte que l'insert (14) ne puisse être introduit dans l'ouverture (12) que depuis le côté intérieur orienté vers l'habitacle du véhicule.
